# EUROPÄISCHE PATENTSCHRIFT

(11) **EP 2 342 467 B1**
(45) Veröffentlichungstag und Bekanntmachung des Hinweises auf die Patenterteilung: **21.02.2018**
(21) Anmeldenummer: 09736402.0
(22) Anmeldetag: 07.10.2009
(51) Int. Cl.: F15B 21/04, B60L 5/32

(54) **SCHIENENGEBUNDENES FAHRZEUG MIT EINEM DRUCKLUFTSYSTEM MIT ZWEI DRUCKBEHÄLTER UND VERFAHREN ZUM BETREIBEN DES DRUCKLUFTSYSTEMS**
RAILWAY VEHICLE WITH A COMPRESSED AIR SYSTEM WITH TWO PRESSURISED RESERVOIRS AND METHOD FOR OPERATING THE SAME
VÉHICULE FERROVIAIRE AVEC UN SYSTÈME À AIR COMPRIMÉ AVEC DEUX RÉSERVOIRS PRESSURISÉS ET MÉTHODE POUR OPÉRER UN TEL SYSTÈME

(30) Priorität: 05.11.2008 DE 102008056479
(43) Veröffentlichungstag der Anmeldung: 13.07.2011
(73) Patentinhaber: Siemens Aktiengesellschaft, 80333 München (DE)
(72) Erfinder: STOFF, Helmut, 83624 Otterfing (DE)
(86) Internationale Anmeldenummer: PCT/EP2009/063013
(87) Internationale Veröffentlichungsnummer: WO 2010/052084

(56) Entgegenhaltungen:
- DE-A1- 3 709 797
- DE-B3- 10 336 058
- DE-B3-102004 038 705
- DE-C1- 3 633 872
- US-A- 4 034 832

## Beschreibung

Die Erfindung bezieht sich auf ein schienengebundenes Fahrzeug mit einem Druckluftsystem nach dem Oberbegriff des Anspruchs 1 sowie auf ein Verfahren zum Betreiben des Druckluftsystems nach dem Oberbegriff des Anspruchs 5.

Ein solches schienengebundenes Fahrzeug ist aus der US 4 034 832 bekannt. Ein Druckluftsystem ist aus der DE 10 2004 038 705 B3 bereits bekannt. Das dort offenbarte Druckluftsystem ist für Kraftfahrzeuge vorgesehen, wobei unterschiedliche Verbraucher mit unterschiedlich hohen Drücken beaufschlagt werden müssen. So werden beispielsweise sicherheitsrelevante Verbraucher beispielsweise pneumatische Antriebe zum Hochstellen einer Motorhaube oder zum Hochklappen einer Kopfstütze in Verbindung mit einem Unfall mit hohen Drücken bis zu 20 bar und getrockneter Druckluft beaufschlagt. Andere Verbraucher, die unter dem Begriff "Komfortapplikationen" zusammengefasst werden, können beispielsweise zum Öffnen der Heckklappe, zum Betätigen von Fenstern oder dergleichen, können mit atmosphärischer Luft beaufschlagt werden.

Auch die DE 37 09 797 A1 sowie die DE 36 33 872 C1 offenbaren Druckluftsysteme.
Aus der deutschen Patentschrift DE 103 36 058 B3 ist ebenfalls ein Druckluftsystem bekannt. Bei diesem Druckluftsystem ist ein Druckbehälter eingangsseitig an eine Druckluftversorgungsanlage angeschlossen und ausgangsseitig mit einer Hauptdruckleitung verbunden. Außerdem ist an den Druckbehälter ausgangsseitig eine Rohrleitung angeschlossen, die über ein Rückschlagventil mit einem Druckluftantrieb für einen Stromabnehmer eines schienengebundenen Fahrzeugs verbunden ist. Die Druckluftversorgungsanlage wird dabei über den Stromabnehmer mit Energie versorgt und stellt einen ausreichenden Luftdruck für den Druckluftantrieb des Stromabnehmers zur Verfügung. Bei längeren Standzeiten des abgerüsteten schienengebundenen Fahrzeugs kann der Druck des Druckbehälters aufgrund von Undichtigkeiten soweit abfallen, dass der Stromabnehmer von dem Fahrdraht getrennt wird. Der Druckluftversorgungsanlage fehlt es dann an der notwendigen Energie, so dass der Druck im Druckbehälter nicht erhöht werden kann und der Stromabnehmer nicht wieder an den Fahrdraht gedrückt werden kann. Zum Aufrüsten des schienengebundenen Fahrzeuges ist für diesen Fall eine Druckgasflasche vorgesehen, die über ein Anschlusssystem mit dem Druckluftantrieb verbunden werden kann und somit ein Aufrüsten des Fahrzeugs bzw. Hochfahren des Stromabnehmers ermöglicht.

Der Erfindung liegt die Aufgabe zugrunde, ein schienengebundenes Fahrzeug mit einem Druckluftsystem sowie ein Verfahren zum Betreiben des Druckluftsystems vorzuschlagen, das auf relativ einfache Weise zuverlässig eine Betätigung seines Druckluftantriebes ermöglicht.

Zur Lösung dieser Aufgabe sind bei einem schienengebundenen Fahrzeug der eingangs angegebenen Art erfindungsgemäß die im Kennzeichen des Anspruchs 1 angegebenen Merkmale vorgesehen.
Durch das Vorsehen eines weiteren Druckbehälters, der hinsichtlich seines Volumens durch Absperrventile absicherbar ist, wird ein Druckluftvolumen vorgehalten, das zuverlässig einen ausreichenden Druck zum Betätigen des Druckluftantriebs zur Verfügung stellt. Der weitere Druckbehälter kann daher auch nach längeren Standzeiten noch dazu verwendet werden, zuverlässig den Druckluftantrieb zu betätigen. Erfindungsgemäß sind die Absperrventile leckagefreie Absperrventile sind, weil dadurch der Druck in dem weiteren Druckbehälter auch bei langen Standzeiten gut aufrecht erhalten bleibt. Als leckagefreie Absperrventile werden bei dem erfindungsgemäßen Druckluftsystem Magnetventile in Sitzbauweise mit Zwangsanhebung oder leckagefreie Absperrhähne eingesetzt. Sowohl Magnetventile in Sitzbauweise mit Zwangsanhebung als auch leckagefreie Absperrhähne sind an sich zwar seit längerem bekannt, jedoch ist ihr Einsatz bei dem erfindungsgemäßen Druckluftsystem besonders vorteilhaft.

Als besonders vorteilhaft wird es angesehen, wenn der eine Druckbehälter und der weitere Druckbehälter hinsichtlich ihrer Aufnahmevolumina so bemessen sind, dass sie zusammen das für das Druckluftsystem erforderliche Gesamtaufnahmevolumen aufweisen. Durch eine solche Ausgestaltung der beiden Druckbehälter lässt sich nämlich erreichen, dass trotz abgesicherten Druckvolumens für eine Betätigung des Druckluftantriebes bzw. für ein Aufrüsten im Falle eines schienengebundenen Fahrzeuges für den normalen Betriebszustand des schienengebundenen Fahrzeuges ein Druckvolumen zur Verfügung steht, wie es für das jeweilige schienengebundene Fahrzeug erforderlich ist.

Vorteilhafterweise ist das Volumen des weiteren Druckluftbehälters relativ groß dimensioniert. Dadurch ist es ermöglicht, dass für das Aufrüsten ein besonders großes Druckvolumen zur Verfügung steht, wodurch auch bei erschwerten Bedingungen mit großer Sicherheit ein Aufrüsten gelingt.

Bei dem erfindungsgemäßen Druckluftsystem können die Absperrventile unterschiedlich ausgebildet sein.

Ferner wird es bei dem erfindungsgemäßen Druckluftsystem als vorteilhaft erachtet, wenn zwischen dem einen Druckluftbehälter und der Hauptdruckluftleitung ein Hauptdruckluftleitungs-Absperrventil liegt.

Um mit besonders großer Zuverlässigkeit den Druckluftantrieb auch bei sehr langen Standzeiten und gegebenenfalls unvorhersehbaren Leckagen sicherzustellen, ist vorteilhafterweise an den Druckluftantrieb ein Hilfsluftsystem angeschlossen, das eigenständig einen Antriebsluftdruck für den Druckluftantrieb bereit hält. Bei diesem Hilfsluftsystem kann es sich beispielsweise um das Hilfsluftsystem handeln, wie es in der eingangs genannten deutschen Patentschrift DE 103 36 058 B3 beschrieben ist. Es können aber als Hilfsluftsysteme auch Anordnungen mit Hilfsdruckbehälter und einem batteriebetriebenen Hilfskompressor zur Anwendung gelangen.

Die Erfindung bezieht sich ferner auf ein Verfahren zum Betreiben eines Druckluftsystems eines schienengebundenen Fahrzeugs nach einem der Ansprüche 1 bis 4 und sieht zur Erzielung einer zuverlässigen Betriebsweise erfindungsgemäß vor, dass im normalen Betriebszustand des schienengebundenen Fahrzeugs das eine Absperrventil (3) geöffnet und das weitere Absperrventil (5) geschlossen gehalten werden, wobei zum Auffüllen der eine Druckbehälter (2) und der weitere Druckbehälter (4) von der Druckluftversorgungsanlage (1) mit Druckluft gefüllt werden, dass beim Abstellen des schienengebundenen Fahrzeugs das eine Absperrventil (3) und das weitere Absperrventil (5) zur Aufrechterhaltung des Druckes im weiteren Druckbehälter (4) während einer Standzeit des schienengebundenen Fahrzeugs geschlossen gehalten werden, und dass zum Aufrüsten des schienengebundenen Fahrzeugs das eine Absperrventil (3) weiterhin geschlossen gehalten und das weitere Absperrventil (5) geöffnet wird, so dass mit dem Druck in dem weiteren Druckbehälter (4) der Druckluftantrieb (8) des Stromabnehmers betätigt wird.

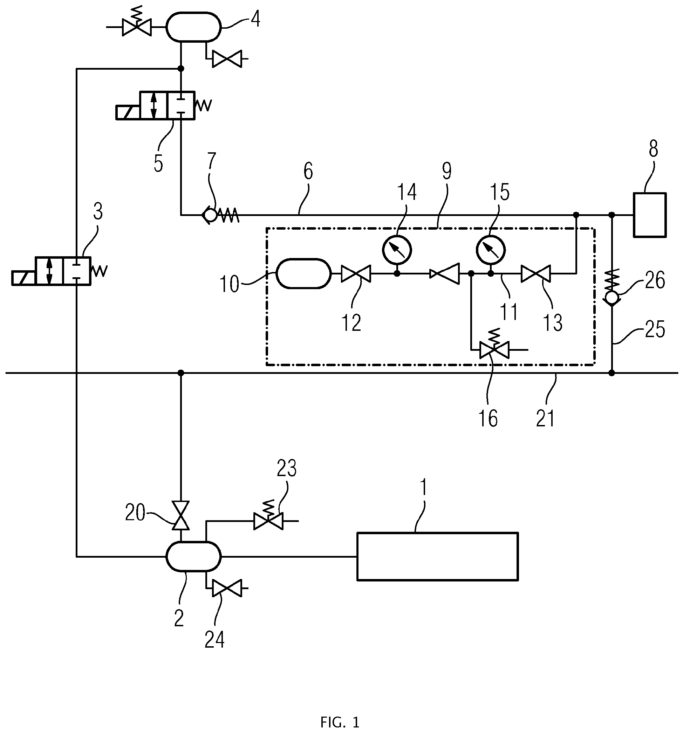

Zur Erläuterung der Erfindung ist in der Figur ein Ausführungsbeispiel des erfindungsgemäßen Druckluftsystems eines schienengebundenen Fahrzeugs dargestellt.

Wie die Figur zeigt, ist an einer Druckluftversorgungsanlage 1 mit seinem Eingang ein Druckbehälter 2 angeschlossen. Der Druckbehälter 2 ist ausgangsseitig mit einem Absperrventil 3 verbunden, bei dem es sich um ein Magnetventil in Sitzbauweise mit Zwangsanhebung oder um einen leckagefreien Absperrhahn handeln kann. Dem Absperrventil 3 ist ein weiterer Druckbehälter 4 nachgeordnet, an den ein weiteres Absperrventil 5 angeschlossen ist, das ebenfalls als Magnetventil in Sitzbauweise mit Zwangsanhebung oder als leckagefreier Absperrhahn ausgeführt sein kann. Mit dem weiteren Absperrventil 5 ist über eine Leitung 6 mit einem Rückschlagventil 7 ein nur schematisch dargestellter Druckluftantrieb 8 angeschlossen, bei dem es sich um die Druckluftsteuerung eines Stromabnehmers des nicht dargestellten schienengebundenen Fahrzeugs handelt.

Mit dem Druckluftantrieb 8 ist außerdem ein Hilfsluftsystem 9 verbunden, das im Wesentlichen so ausgeführt ist, wie es in der eingangs genannten deutschen Patentschrift DE 103 36 058 B3 beschrieben ist. Wesentliche Komponenten des Hilfsluftsystems 9 sind somit eine Druckgasflasche 10, die über eine Rohrleitung 11 mit einem absperrenden Ventil 12 und einem weiteren absperrenden Ventil 13 an den Druckluftantrieb 8 angeschlossen ist. Komponenten 14 und 15 stellen Manometer dar. Ein Ventil 16 bildet ein Sicherheitsventil.

Die Figur zeigt ferner, dass an den einen Druckbehälter 2 ausgangsseitig über ein Hauptdruckluftleitungs-Absperrventil 20 eine Hauptdruckluftleitung 21 angeschlossen ist, bei der es sich um die durchgehende Hauptluftbehälterleitung des Druckluftsystems des schienengebundenen Fahrzeugs handelt. Ferner ist an den einen Druckbehälter 2 ein Sicherheitsventil 23 und ein Entwässerungshahn 24 angeschlossen.

Das dargestellte Druckluftsystem arbeitet in folgender Weise:

Zum Auffüllen des einen Druckbehälters 2 und des weiteren Druckbehälters 4 wird von der Druckluftversorgungsanlage 1 über das in diesem Zustand offene eine Absperrventil 3 der weitere Druckbehälter 4 mit Druckluft gefüllt, wobei das weitere Absperrventil 5 geschlossen ist. Das Hauptdruckluftleitungs-Absperrventil 20 kann in diesem Zustand geöffnet sein, so dass von der Druckluftversorgungsanlage 1 auch Druckluft in die Hauptdruckluftleitung 21 eingespeist wird. Auch nach Auffüllung des weiteren Druckbehälters 4 bleibt das eine Absperrventil 3 offen, so dass der eine Druckbehälter 2 mit dem weiteren Druckbehälter 4 im normalen Betriebszustand des Druckluftsystems die Funktion des sonst vorgesehenen Hauptdruckbehälters ausübt.

Wird das schienengebundene Fahrzeug abgestellt, dann wird das eine Absperrventil 3 geschlossen, so dass der weitere Druckbehälter 4 in Folge der Verwendung leckagefreier Absperrventile über relativ lange Zeit seinen Druck aufrecht erhalten kann.

Soll eine Betätigung des Druckluftantriebs 8, zur Ansteuerung des Stromabnehmers des schienengebundenen Fahrzeuges erfolgen, dann bleibt das eine Absperrventil 3 weiterhin geschlossen, während das weitere Absperrventil 5 geöffnet wird, so dass mit dem Druck in dem weiteren Druckbehälter 4 der Druckluftantrieb 8 in Gang gesetzt werden kann, mithin der Stromabnehmer des schienengebundenen Fahrzeuges gegen den Fahrdraht geführt werden kann. Da das Volumen des weiteren Druckbehälters 4 relativ groß ist, kann der Druckluftantrieb 8 mehrmals hintereinander betätigt werden, ohne dass es dazu an dem erforderlichen Druck mangelt.

Ist der Stromabnehmer gegen den Fahrdraht geführt, dann bekommt die Druckluftversorgungsanlage 1 des dargestellten Druckluftsystems wieder Energie und versorgt den einen Druckbehälter 2 und auch den weiteren Druckbehälter 4 wieder mit neuer Druckluft, weil gleichzeitig das eine Absperrventil 3 geöffnet und das weitere Absperrventil 5 geschlossen wird.

Die betriebliche Druckversorgung des Druckluftantriebs 8 erfolgt über eine Leitung 25 und ein Rückschlagventil 26 unabhängig von den Schaltstellungen der Ventile 3 und 5 aus der Hauptluftbehälterleitung 21.

Die entsprechende Steuerung des Druckluftsystems ergibt sich aus der geschilderten Funktionsweise und ist daher nicht im Einzelnen dargestellt.

## Patentansprüche

1. Schienengebundenes Fahrzeug mit einem Druckluftsystem, mit einem Druckbehälter (2), der eingangsseitig an eine Druckluftversorgungsanlage (1) angeschlossen ist und ausgangsseitig mit einer Hauptdruckluftleitung (21) verbunden ist, und mit einem Druckluftantrieb (8) eines Stromabnehmers des Fahrzeugs, wobei der Druckbehälter (2) ausgangsseitig über ein Absperrventil (3) mit einem weiteren Druckbehälter (4) verbunden ist und der weitere Druckbehälter (4) über ein weiteres Absperrventil (5) mit dem Druckluftantrieb (8) verbunden ist,
**dadurch gekennzeichnet, dass**
das Volumen des weiteren Druckbehälters (4) so groß ist, dass damit der Druckluftantrieb (8) des Stromabnehmers mehrmals hintereinander betätigbar ist, und dass das eine und das weitere Absperrventil (3, 5) Magnetventile in Sitzbauweise mit Zwangsanhebung und/oder leckagefreie Absperrhähne sind, so dass der Druck in dem weiteren Druckbehälter (4) auch bei längeren Standzeiten des schienengebundenen Fahrzeugs gut aufrechterhalten bleibt.

2. Fahrzeug nach Anspruch 1,
**dadurch gekennzeichnet, dass**
der eine Druckbehälter(2) und der weitere Druckbehälter (4) hinsichtlich ihrer Aufnahmevolumina so bemessen sind, dass sie zusammen das für das Druckluftsystem erforderliche Gesamtaufnahmevolumen aufweisen.

3. Fahrzeug nach einem der vorangehenden Ansprüche,
**dadurch gekennzeichnet, dass** zwischen dem einen Druckluftbehälter (2) und der Hauptdruckluftleitung (21) ein Hauptdruckluftleitungs-Absperrventil (20) liegt.

4. Fahrzeug nach einem der vorangehenden Ansprüche,
**dadurch gekennzeichnet, dass** an den Druckluftantrieb (8) ein Hilfsluftsystem (9) angeschlossen ist, das eigenständig einen Antriebsluftdruck für den Druckluftantrieb (8) bereit hält.

5. Verfahren zum Betreiben eines Druckluftsystems eines schienengebundenen Fahrzeugs nach einem der vorangehenden Ansprüche,
**dadurch gekennzeichnet,**
**dass** im normalen Betriebszustand des schienengebundenen Fahrzeugs das eine Absperrventil (3) geöffnet und das weitere Absperrventil (5) geschlossen gehalten werden, wobei zum Auffüllen der eine Druckbehälter (2) und der weitere Druckbehälter (4) von der Druckluftversorgungsanlage (1) mit Druckluft gefüllt werden,
**dass** beim Abstellen des schienengebundenen Fahrzeugs das eine Absperrventil (3) und das weitere Absperrventil (5) zur Aufrechterhaltung des Druckes im weiteren Druckbehälter (4) während einer Standzeit des schienengebundenen Fahrzeugs geschlossen gehalten werden,
und **dass** zum Aufrüsten des schienengebundenen Fahrzeugs das eine Absperrventil (3) weiterhin geschlossen gehalten und das weitere Absperrventil (5) geöffnet wird, so dass mit dem Druck in dem weiteren Druckbehälter (4) der Druckluftantrieb (8) des Stromabnehmers betätigt wird.

## Claims

1. Rail-bound vehicle with a compressed air system, with a pressure vessel (2), which is linked to a compressed air supply facility (1) on the input side and is connected to a main compressed air line (21) on the outlet side, and with a compressed air drive (8) of a current collector of the vehicle, wherein the pressure vessel (2) is connected to a further pressure vessel (4) via a shut-off valve (3) on the outlet side and the further pressure vessel (4) is connected to the compressed air drive (8) via a further shut-off valve (5),
**characterised in that**
the volume of the further pressure vessel (4) is large enough that the compressed air drive (8) of the current collector can be actuated a number of times in succession thereby, and that the one and the further shut-off valve (3, 5) are solenoid valves with a seated design with forced lifting and/or leak-free stopcocks, so that the pressure in the further pressure vessel (4) is well maintained even during longer idle times of the rail-bound vehicle.

2. Vehicle according to claim 1,
**characterised in that**
the one pressure vessel (2) and the further pressure vessel (4) are dimensioned in terms of their capacity volumes such that together they have the overall capacity volume required for the compressed air system.

3. Vehicle according to one of the preceding claims,
**characterised in that**
a main compressed air line shut-off valve (20) lies between the one pressure vessel (2) and the main compressed air line (21).

4. Vehicle according to one of the preceding claims,
**characterised in that**
linked to the compressed air drive (8) is an auxiliary air system (9), which independently keeps a drive air pressure available for the compressed air drive (8).

5. Method for operating a compressed air system of a rail-bound vehicle according to one of the preceding claims,
**characterised in that**
in the normal operating state of the rail-bound vehicle, the one shut-off valve (3) is held open and the further shut-off valve (5) is held closed, wherein, in order to fill up, the one pressure vessel (2) and the further pressure vessel (4) are filled with compressed air by the compressed air supply facility (1),
when parking the rail-bound vehicle, the one shut-off valve (3) and the further shut-off valve (5) are held closed during an idle time of the rail-bound vehicle to maintain the pressure in the further pressure vessel (4),
and, in order to equip the rail-bound vehicle, the one shut-off valve (3) is furthermore held open and the further shut-off valve (5) is opened, so that the compressed air drive (8) of the current collector is actuated by the pressure in the further pressure vessel (4).

## Revendications

1. Véhicule ferroviaire comprenant un système d'air comprimé ayant un réservoir (2) sous pression, qui est raccordé, du côté de l'entrée, à une installation (1) d'alimentation en air comprimé et qui est relié, du côté de la sortie, à un conduit (21) principal d'air comprimé, et ayant un entraînement (8) à air comprimé d'un appareil de prise de courant du véhicule, le récipient (2) sous pression étant relié, du côté de la sortie, par une vanne (3) d'arrêt à un autre récipient (4) sous pression et l'autre récipient (4) sous pression étant relié par une autre vanne (5) d'arrêt à l'entraînement (8) à air comprimé,
**caractérisé en ce que**
le volume de l'autre réservoir (4) sous pression est si grand qu'ainsi l'entraînement (8) à air comprimé de l'appareil de prise de courant peut être actionné plusieurs fois l'une après l'autre et **en ce que** la une et l'autre vanne (3, 5) d'arrêt sont des électrovannes en mode de construction siège à soulèvement forcé et/ou des robinets d'arrêt sans fuite, de manière à ce que la pression dans l'autre réservoir (4) sous pression reste maintenue, même pendant des temps d'inactivité assez longs du véhicule ferroviaire.

2. Véhicule suivant la revendication 1,
**caractérisé en ce que**
le un réservoir (2) sous pression et l'autre réservoir (4) sous pression sont tels, en ce qui concerne leur volume de réception, qu'ils ont ensemble le volume de réception totale nécessaire pour le système à air comprimé.

3. Véhicule suivant l'une des revendications précédentes,
**caractérisé en ce que**
une vanne (20) d'arrêt de conduit d'air comprimé principal est montée entre le un réservoir (2) d'air comprimé et le conduit (21) d'air comprimé principal.

4. Véhicule suivant l'une des revendications précédentes,
**caractérisé en ce que**
à l'entraînement (8) à air comprimé est raccordé un système (9) d'air auxiliaire, qui maintient déjà indépendamment une pression d'air d'entraînement pour l'entraînement (8) à air comprimé.

5. Procédé pour faire fonctionner un système à air comprimé d'un véhicule ferroviaire suivant l'une des revendications précédentes,
**caractérisé**
**en ce que**, dans l'état de fonctionnement normal du véhicule ferroviaire, on maintient ouverte la une vanne (3) d'arrêt et fermée l'autre vanne (5) d'arrêt, dans lequel, pour le remplissage, on remplit d'air comprimé le un réservoir (2) sous pression et l'autre réservoir (4) sous pression par l'installation (1) d'alimentation en air comprimé,
**en ce que**, lors du retrait du véhicule ferroviaire, on maintient fermées, pendant un temps d'inactivité du véhicule ferroviaire, la une vanne (3) d'arrêt et l'autre vanne (5) d'arrêt, pour maintenir la pression dans l'autre réservoir (4) sous pression,
et **en ce que**, pour réarmer le véhicule ferroviaire, on maintient encore fermée la vanne (3) d'arrêt et on ouvre l'autre vanne (5) d'arrêt, de manière à actionner l'entraînement (8) à air comprimé de l'appareil de prise de courant par la pression dans l'autre réservoir (4) sous pression.
